# FASCICULE DE BREVET EUROPEEN

(11) **EP 3 731 953 B1**
(45) Date de publication et mention de la délivrance du brevet: **22.07.2026**
(21) Numéro de dépôt: 18826071.5
(22) Date de dépôt: 21.12.2018
(51) Int. Cl.: B01D 63/08, B01D 33/21, B01D 33/35, B01D 33/39, B01D 63/16, B01D 33/56

(54) **DISPOSITIF ET PROCÉDÉ DE PRODUCTION SIMULTANÉE DE FILTRATS DISTINCTS À PARTIR D'UN SUBSTRAT UNIQUE**
VORRICHTUNG UND VERFAHREN ZUR GLEICHZEITIGEN HERSTELLUNG GETRENNTER FILTRATE AUS EINEM EINZIGEN SUBSTRAT
DEVICE AND METHOD FOR SIMULTANEOUSLY PRODUCING SEPARATE FILTRATES FROM A SINGLE SUBSTRATE

(30) Priorité: 28.12.2017 LU 100597
(43) Date de publication de la demande: 04.11.2020
(73) Titulaire: FRANCE MEMBRANES TECHNOLOGIES - FMT, 34070 Montpellier (FR)
(72) Inventeur: MERICAN, Franck, 34070 Montpellier (FR); TROUVE, Emmanuel, 34270 Vacquières (FR)
(74) Mandataire: Dennemeyer & Associates S.A.
(86) Numéro de dépôt international: PCT/EP2018/086695
(87) Numéro de publication internationale: WO 2019/129730

(56) Documents cités:
- EP-A1- 2 612 701
- EP-A1- 2 905 067
- WO-A1-03/039708
- WO-A1-2013/000002
- JP-A- H06 327 947
- JP-A- H07 289 861
- US-A- 4 046 685
- US-A1- 2003 183 586

## Description

La présente divulgation concerne un dispositif et un procédé de co-extraction de liquides filtrés distincts, à disques rotatifs à haute efficience pour l'énergie et pour les transferts.

L'extraction de liquides filtrés est réalisée par séparation liquide/solide et par tamisage moléculaire mettant en œuvre des membranes : ces filtres aux pores de taille submicronique sont implantés dans des modules (enveloppes ou enceintes) développant la surface de filtration et générant les conditions hydrodynamiques en opération.

La présente divulgation porte sur tous les domaines d'application des technologies membranaires industrielles, en particulier les industries agro-alimentaires, agricoles, pharmaceutiques, cosmétiques, chimiques, pétrolières et gazières et toutes les activités liées aux eaux usées (digestats, lisiers, toute sortes d'effluents) et à l'environnement (station d'épuration, producteurs de biogaz, effluents laitiers, opérateurs et gestionnaires d'immeubles etc).

Plus particulièrement, la présente divulgation s'adresse aux applications qui sont pénalisées par un coût trop élevé des modules membranaires et/ou par la succession de modules membranaires requis pour obtenir des liquides filtrés distincts et/ou par une consommation énergétique excessive lors de l'utilisation desdits modules membranaires.

Il n'existe aucun système équivalent à la présente divulgation.

WO 2013/000002 concerne un dispositif pour filtrer des liquides mais ne divulgue pas deux arbres de rotation coaxiaux distincts séparés axialement l'un de l'autre.

EP 2905067 concerne un dispositif de filtration dynamique d'un liquide mais ne divulgue pas deux arbres de rotation coaxiaux distincts séparés axialement l'un de l'autre.

JP H07 289861 concerne un dispositif de rotation et d'agitation de liquides mais ne divulgue pas deux moteurs coaxiaux, ni une évacuation du filtrat (11A,11B) par un premier moyen d'évacuation (13A) et par un deuxième moyen d'évacuation (13B) étant localisés sur ledit arbre de rotation à l'extérieur de ladite enceinte. Ce dispositif comprend une partie mélangeur (à gauche) et une partie de filtration (à droite) sortant un filtrat par une sortie (40).

US 2003/0183586 concerne un dispositif de mélange et d'agitation d'un liquide et d'un floculant mais ne divulgue pas un arbre de rotation animé par au-moins un moyen de rotation distinct à chaque extrémité dudit arbre, lesdits moyens de rotation et ledit arbre de rotation étant coaxiaux.

EP 2612701 concerne un dispositif pour filtrer des liquides.

US 4046685 concerne la production simultanée de multiples niveaux d'eau purifiée par osmose inverse.

JPH 6327947 concerne un séparateur à membranes rotatives.

WO 03039708 concerne un système et filtration à flux ramifié.

La présente invention est mentionnée dans le jeu de revendication en annexe.

Une même membrane, employée sur un même fluide, peut donner des performances différentes dans des modules différents, même à conditions opératoires apparemment identiques. Ceci est dû à la configuration géométrique du module. La présente divulgation concerne plus particulièrement la géométrie « disque » où un module généralement de forme cylindrique comprend une ou plusieurs séries de disques membranaires.

Ce type de module est équipé d'un moteur extérieur entrainant un arbre pour mettre en rotation les disques membranaires et pour assurer l'évacuation des matières retenues lors de la filtration.

La résistance des pièces mécaniques de l'axe de rotation est limité d'une part par la nécessité d'avoir une partie creuse ayant le diamètre le plus important possible pour permettre l'évacuation du liquide filtré, et d'autre part par le diamètre extérieur qui doit être le plus faible possible pour ne pas diminuer la surface de filtration des disques de filtration creux en rapport avec son diamètre. Ladite résistance mécanique dudit axe de rotation détermine une limite maximale de couple et/ou de la vitesse de rotation des disques, ce qui limite voire rend caduque économiquement la mise en œuvre de ce type de modules dans certaines applications industrielles.

Même à vitesse modérée, la résistance des pièces mécanique de l'axe de rotation détermine aussi un nombre maximal de disques par enveloppe (ou enceinte), limité, ce qui interdit la mise en œuvre de ce type de modules dans certaines applications industrielles.

Un premier problème à résoudre par la présente invention consiste à extraire simultanément d'un même module au moins deux liquides filtrés distincts. Un second problème à résoudre par la présente invention consiste à augmenter la capacité de rotation des disques d'une même enveloppe (ou enceinte), à puissance spécifique consommée constante, et à effectuer un dégoulottage de la capacité d'évacuation des liquides filtrés.

La solution audits problèmes est de démultiplier le nombre de moyens d'entrainements des disques d'une même enveloppe (ou enceinte) et de découpler les groupes de disques membranaires , de sorte que chacun des groupes de disques soit entrainé spécifiquement par l'un desdits moyens de transmission dédié et les évacuations de filtrats obtenus puissent être séparées.

La présente invention consiste à découpler et séparer les évacuations des filtrats obtenus par la filtration à travers chacun des groupes de disques membranaires au moyen d'un obturateur dans l'arbre de rotation creux et/ou au moyen d'une mise en œuvre d'arbres de rotation distincts dans une même enceinte et/ou au moyen de la mise en œuvre de disques membranaires de seuils de coupure distincts dans une même enceinte. Le procédé décrit dans la présente invention consiste à implanter au moins un second moyen de transmission à l'autre extrémité de l'enveloppe (ou enceinte) et à dissocier les disques membranaires en au-moins deux sous-ensembles, portés par deux arbres de rotation, de sorte que chacun des groupes de disques soit entrainé spécifiquement par l'un desdits moyens de transmission dédié.

Les avantages procurés sont :
Il n'est plus nécessaire de mettre en œuvre plusieurs enceintes successives pour obtenir plusieurs filtrats de compositions distinctes (gain de coût d'investissement par simplification).

Il n'est plus nécessaire d'attendre l'obtention d'un premier filtrat pour lui appliquer une seconde filtration (gain de temps grâce à la simultanéité).

Il est possible d'obtenir simultanément aux moins deux liquides filtrés distincts à partir d'un même substrat initial (gain de valorisation d'une matière première par fractionnement).

La présente invention concerne un dispositif de filtration tel que défini dans la revendication 1.

De préférence, au moins une lumière (33) permet l'écoulement depuis l'espaceur (10) jusqu'à l'intérieur de l'arbre.

De préférence, chaque partie distincte (30A,30B) dudit arbre de rotation possède au-moins une de ladite lumière (33) adaptée pour conduire du filtrat (11A, 11B) depuis l'espaceur (10) vers l'intérieur dudit arbre de rotation.

De préférence, les deux parties distinctes (30A,30B) sont chacune délimitées d'une part par un moyen d'évacuation (13A,13B) du filtrat (11A, 11B) et d'autre part par l'obturateur (15). De préférence, les deux parties distinctes (30A,30B) sont chacune de dimension (longueur, section, diamètre) identique ou différente en fonction de la localisation de l'obturateur (15) à l'intérieur de l'arbre de rotation.

La collection du filtrat (11A, 11B) est effectuée dans deux parties distinctes (16A,16B) au sein de ladite enceinte, chaque partie distincte évacuant un filtrat différent (11A,11B) dans des directions opposées, les deux parties distinctes (16A,16B) sont chacune délimitées d'une part par un moyen d'évacuation (13A,13B) du filtrat (11A,11B) et d'autre part par l'extrémité distale de chaque arbre de rotation interne à l'enceinte.

Ladite enceinte (1;1A,1B;1A,1B,1C,1D) est traversée par **deux arbres** (3 ;3A,3B) de rotation distincts et disposés en enfilade délimitant deux sections de filtration successives distinctes dans l'enceinte, chaque section étant délimitée par la plaque d'étanchéité et l'extrémité de l'arbre de rotation interne à l'enceinte, et chacun desdits arbres (3 ;3A,3B) de rotation est animé par **un moyen de rotation** (5,5A,5B,5C) distinct, lesdits moyens de rotation sont coaxiaux et lesdits arbres de rotation sont séparés axialement l'un de l'autre, et le dispositif comprend au-moins un moyen d'évacuation (13A,13B) du filtrat (11) par arbre de rotation, chaque moyen d'évacuation étant localisé sur ledit arbre de rotation à l'extérieur de ladite enceinte.

Le terme « en enfilade » possède la signification suivante : série de moyens se suivant sur une même ligne, en file. Le terme « enfilade » a une portée plus large que le terme « coaxial » car il englobe des déviations de direction.

De préférence, les deux moyens de rotation (5,5A,5B,5C) distincts sont situés à l'extérieur de ladite enceinte et à l'extrémité de chacun desdits arbres.

Lesdits moyens d'évacuation sont localisés sur ledit arbre de rotation soit entre ladite plaque d'étanchéité et l'extrémité proximale dudit moyen de rotation, soit à l'extrémité distale dudit moyen de rotation.

L'extrémité proximale du moyen de rotation étant définie par l'extrémité du moyen de rotation étant la plus proche de l'enceinte.

L'extrémité distale du moyen de rotation étant définie par l'extrémité du moyen de rotation étant la plus éloignée de l'enceinte.

De préférence, l'arbre (3 ;3A,3B) de rotation est sensiblement horizontal.

De préférence, l'arbre (3 ;3A,3B) de rotation tourne soit dans le même sens de rotation que les aiguilles d'une montre, soit dans un sens de rotation opposé au sens des aiguilles d'une montre, au sein d'une même enceinte.

De préférence, chaque arbre (3 ;3A,3B) de rotation tourne soit dans le même sens de rotation, soit dans un sens de rotation opposé d'un arbre par rapport à l'autre arbre, au sein d'une même enceinte.

De préférence, l'espace entre ladite enceinte (1) et le disque de filtration (4) est compris entre 10mm et 400mm, 20mm et 300mm, 30mm et 200mm, 40mm et 100mm, 50mm et 90mm. De préférence, l'arbre (3 ;3A,3B) de rotation est creux.

De préférence, ladite enceinte (1;1A,1B; 1C, 1D) reste immobile.

De préférence, ladite plaque d'étanchéité (2A,2B) est traversée en son centre par au-moins un arbre de rotation.

Une partie interne (30A,30B) dudit arbre de rotation (3) sert à collecter et évacuer le perméat (ou aussi appelé le filtrat) issu dudit disque de filtration (4) à l'extérieur de ladite enceinte.

Un moyen d'introduction (6) du liquide à filtrer traverse au-moins une plaque d'étanchéité (2A,2B).

De préférence, au-moins un moyen de sortie (7) du concentrât hors de ladite enceinte (1) traverse au-moins une plaque d'étanchéité.

De préférence, la longueur dudit espace inter-disque (10A) est soit identique soit croissante, entre le moyen d'introduction (6) et le moyen de sortie (7).

De préférence, la longueur de l'espace inter-disque (10A) varie entre 4mm et 10mm, 5mm et 9mm, 6mm et 8mm.

Deux arbres de rotation (3) sont mis en œuvre dans une même enceinte (1).

De préférence, les arbres (3) de rotation situés dans une même enceinte, tournent en sens opposé l'un par rapport à l'autre.

De préférence, les moyens d'introduction (6) du produit à filtrer (8) sont connectés auxdites plaques d'étanchéités (2) et la sortie du concentrât est connectée en un point situé entre les extrémités intérieures des arbres situés dans l'enceinte.

De préférence, le moyen d'introduction (6) du produit à filtrer (8) est connecté à une des plaques d'étanchéité (2A) et le moyen de sortie (7) du concentrât est connectée à la plaque d'étanchéité (2B) opposée.

De préférence, les disques de filtration (4) ont des seuils de coupure de microfiltration ou ultrafiltration ou nanofiltration.

De préférence, les disques de filtration (4) associés à un arbre peuvent être regroupés en plusieurs sous-ensembles composés unitairement de 5 à 80 disques.

De préférence, les disques de filtration (4) sont fabriqués en céramique ou en métal ou en carbures ou en matériaux organiques ou un mélange d'au-moins deux desdits matériaux précités.

De préférence, ledit arbre (3 ;3A,3B) de rotation met en rotation au-moins deux groupes distincts disques de filtration (4) ce qui permet la démultiplication du nombre d'arbre (3 ;3A,3B) de rotation entrainant lesdits groupes de disque de filtration (4) dans une même enceinte et le découplage entre les groupes de disques de filtration (4), de sorte que chacun des groupes de disques de filtration (4) soit entrainé spécifiquement par au-moins un arbre (3 ;3A,3B) de rotation dédié et permettant l'évacuation du filtrat (11A,11B) obtenu par un moyen d'évacuation (13A,13B) du filtrat (11A,11B).

De préférence, ledit moyen d'évacuation (13A,13B) du filtrat (11A,11B) est placé sur un arbre (3 ;3A,3B) et est situé à l'extérieur de ladite enceinte (1;1A,1B;1A,1B,1C,1D) délimitée par chaque plaque d'étanchéité (2A,2B ;2C,2D) située à l'extrémité de l'enceinte.

De préférence, le dispositif comprend au-moins deux moyens d'évacuation distincts (13A, 13B) du filtrat (11A,11B), collectant dans 2 zones (14A,14B) de conditions hydrodynamiques distinctes au sein de la dite enceinte des filtrats (11A,11B) distincts issus simultanément du même substrat, lesdits moyens d'évacuation étant localisés sur ledit arbre de rotation à l'extérieur de ladite enceinte.

De préférence la zone (14A) peut être d'une dimension inférieure, supérieure ou égale à la zone (14B).

La présente invention concerne aussi un procédé de filtration mis en œuvre par le dispositif de la présente divulgation, défini dans la revendication indépendante correspondante.

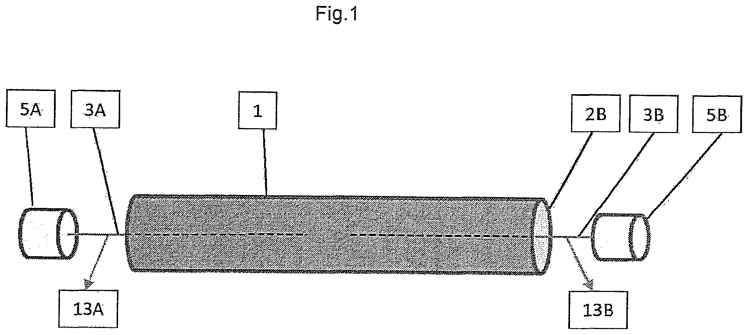

Premier aspect (figure 1) : 2 moteurs et 2 arbres de rotation axial au sein d'une seule enceinte. Le premier aspect couvre un dispositif de filtration comprenant:
- au-moins une enceinte (1) définissant un axe longitudinal, ladite enceinte étant obstruée à chaque extrémité par au-moins une plaque d'étanchéité (2A,2B), lesdites plaques d'étanchéités étant traversées par un arbre (3A,3B) de rotation indépendant axial par rapport à ladite enceinte (1), et animé par au-moins un moyen de rotation (5A,5B) par arbre (3A,3B) de rotation,
- au-moins un disque de filtration (4) mis en rotation et au-moins un espaceur (10) placé entre chaque disque de filtration (4), ledit espaceur (10) définissant un espace inter-disque (10A) où est localisé un joint d'étanchéité (99),
- ledit disque de filtration (4) et ledit espaceur (10) étant disposés sur ledit au-moins un arbre de rotation (3A,3B) à l'intérieur de ladite enceinte (1),
- ledit arbre (3A,3B) de rotation mettant en rotation ledit au-moins un disque de filtration (4), par l'intermédiaire d'au moins un espaceur (10) soit dans le même sens de rotation, soit dans un sens de rotation opposé par rapport à l'arbre opposé.

### Description des figures:

La figure 1 montre un premier aspect du dispositif de la présente divulgation comprenant 2 arbres de rotation et 2 moyens de rotation (moteurs) et 1 enceinte. L'enceinte est composée d'une enceinte fermée de chaque côté par une plaque d'extrémité traversée par un demi arbre, les disques de filtration étant enfilés sur ledit demi arbre. Le liquide filtré par les disques est collecté et évacué au travers du centre de l'arbre vers l'extérieur de l'enceinte. Les deux arbres peuvent être mis en rotation dans le même sens ou en sens opposé. Les deux arbres peuvent avoir des vitesses de rotation différentes. Les deux arbres peuvent être équipés du même nombre de disques ou d'un nombre de disques différent.

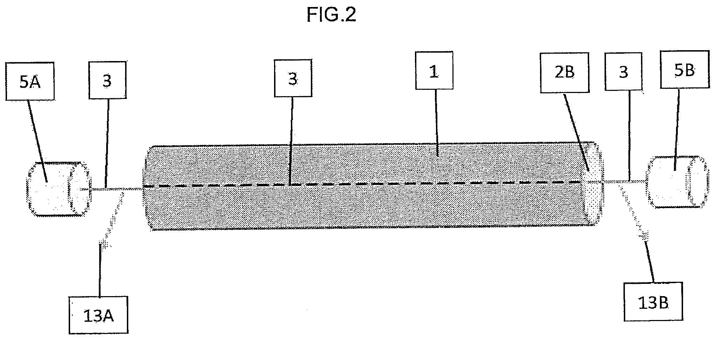

La figure 2 montre une comparaison entre le dispositif mono-moteur et le dispositif bi-moteur.

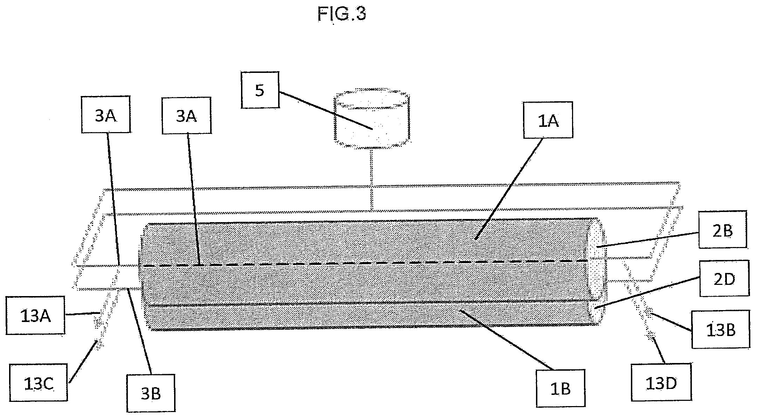

La figure 3 montre le couple et la puissance en comparaison avec la vitesse de rotation.

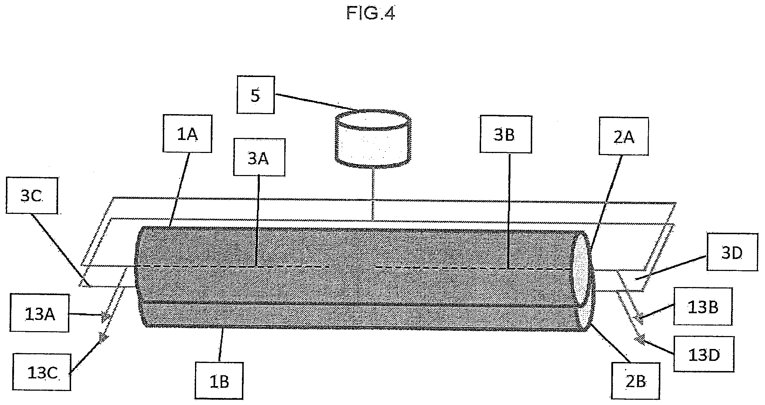

La figure 4 montre l'impact du passage de la vitesse de rotation de 284tours/min à 320 tours/min sur le couple en Nm.

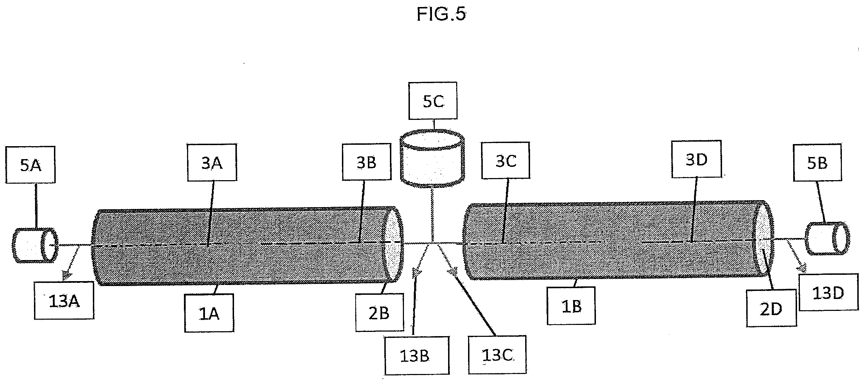

La figure 5 montre l'impact du passage de la vitesse de rotation de 284tours/min à 320 tours/min sur le flux de perméation.

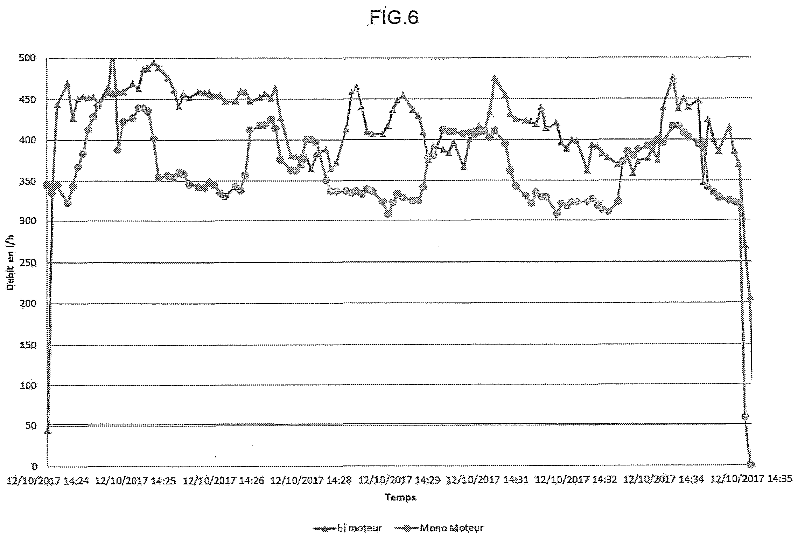

La figure 6 montre la viscosité du produit entrant en fonction du taux de cisaillement.

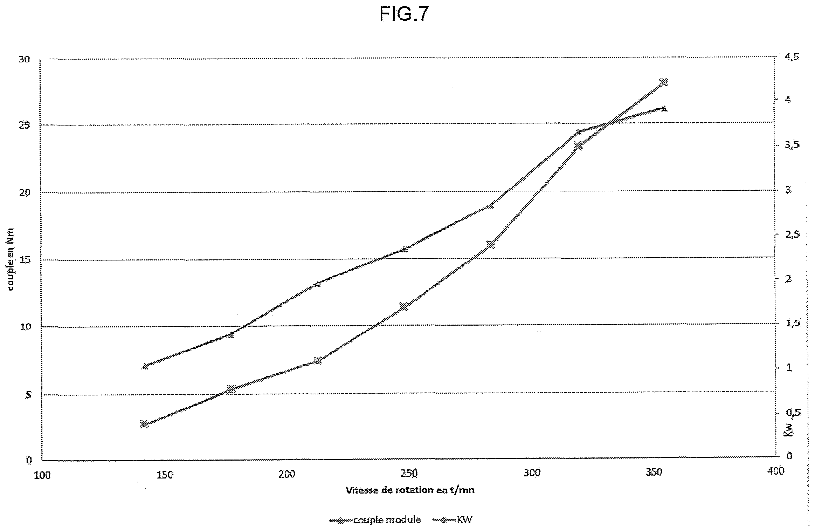

La figure 7 montre la viscosité du produit entrant en fonction du taux de cisaillement avec une viscosité du concentrât 10 fois plus importante. Le produit sortant du dispositif est bien plus concentré que le produit entrant dans le dispositif.

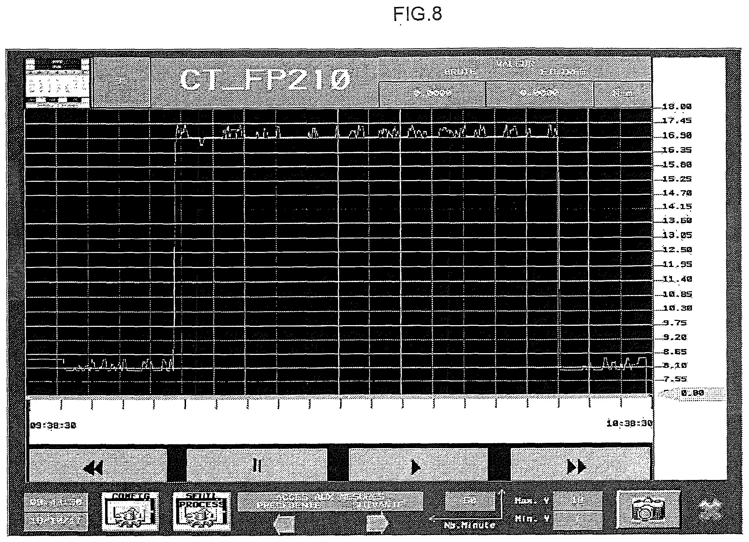

La figure 8 montre une vue en coupe de l'intérieur d'une enceinte comprenant au-moins un espaceur (10), au-moins un joint d'étanchéité (99), un arbre de rotation (3) (ou d'entrainement) et au-moins un disque de filtration (4).

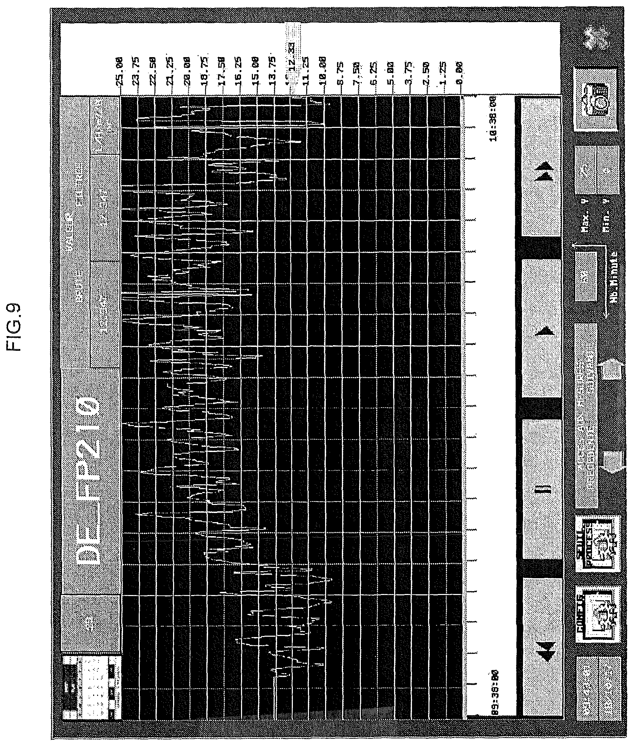

La figure 9 montre une vue en coupe de l'intérieur d'une enceinte comprenant deux moyens de rotation (5A,5B), le moyen d'introduction (6) du liquide à filtrer, le moyen de sortie (7) du concentrât (liquide sale) par une plaque d'extrémité (2B) et le moyen d'évacuation du filtrat (liquide propre) (13A, 13B). Le moyen d'évacuation (13A) du filtrat opère dans l'arbre de rotation (3A) et le moyen d'évacuation (13B) du filtrat opère dans l'arbre de rotation (3B).

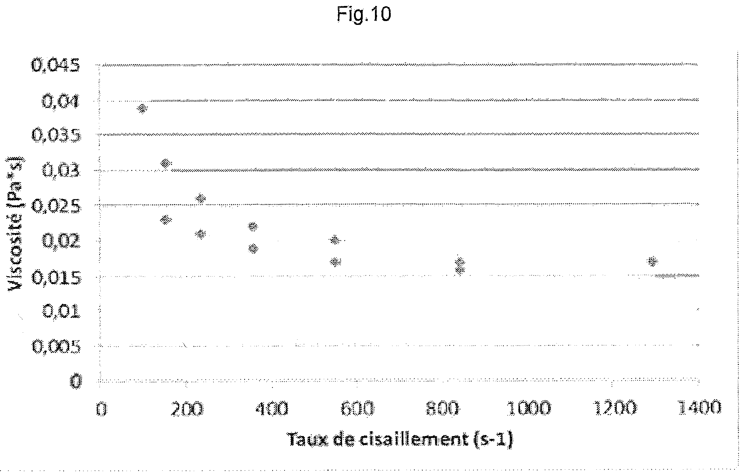

La figure 10 montre une vue en coupe de l'intérieur d'une enceinte comprenant deux moyens de rotation (5A,5B), le moyen d'introduction (6) du liquide à filtrer, le moyen allongé de sortie (7) du concentrât (liquide sale) par une plaque d'extrémité (2B) et le moyen d'évacuation du filtrat (liquide propre) (13A, 13B). Le moyen d'évacuation (13A) du filtrat opère dans l'arbre de rotation (3A) et le moyen d'évacuation (13B) du filtrat opère dans l'arbre de rotation (3B).

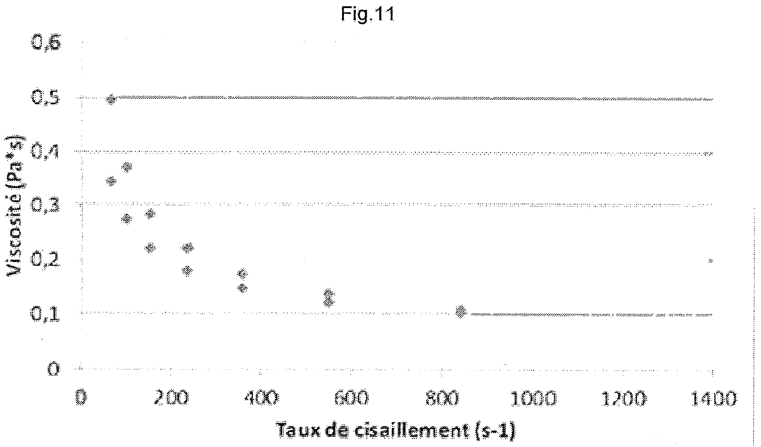

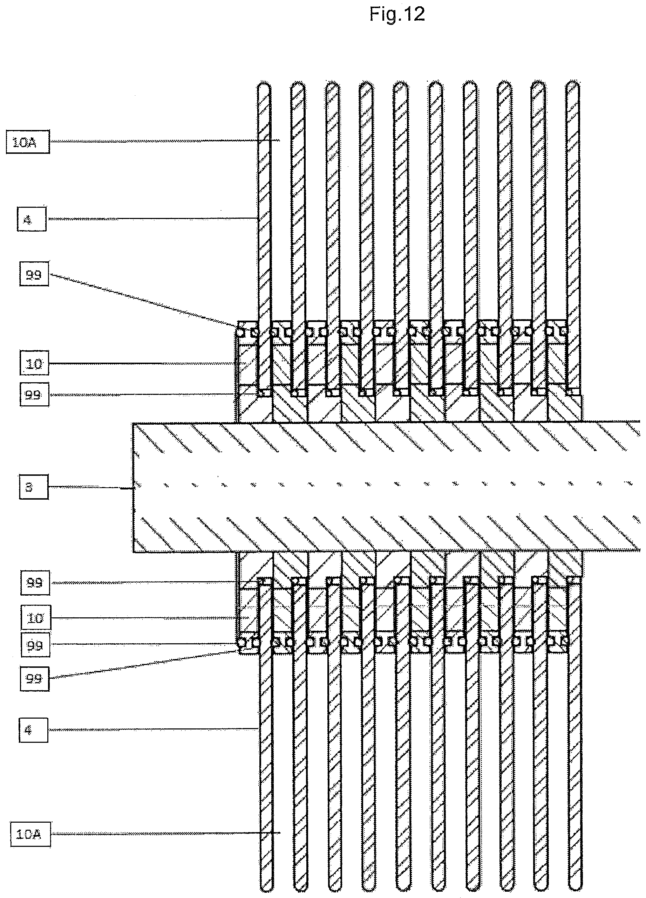

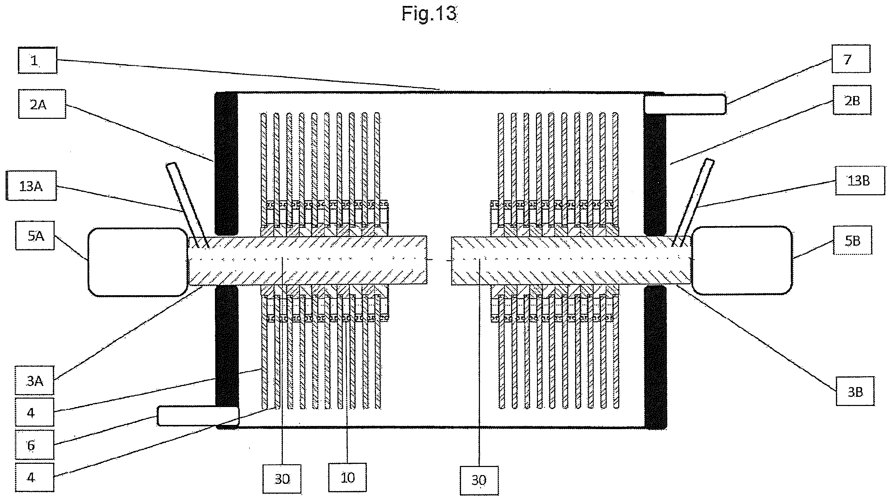

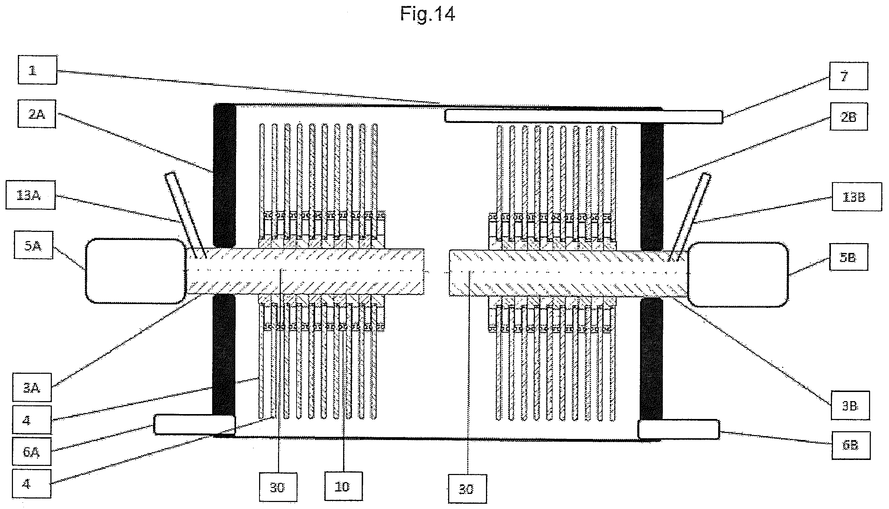

La figure 11 montre un premier arbre de rotation (3A) et un deuxième arbre de rotation (3B), les deux arbres de rotation étant coaxiaux et physiquement séparés ainsi qu'un moyen de rotation (moteur) localisé à l'extrémité, externe à l'enceinte (1), de chaque arbre. Le moyen d'évacuation (13A) du filtrat opère dans le premier arbre de rotation (3A) et le moyen d'évacuation (13B) du filtrat opère dans le second arbre de rotation (3B), lesdits moyens d'évacuation étant localisés sur ledit arbre de rotation entre ladite plaque d'étanchéité et ledit moyen de rotation. Le liquide à filtrer est introduit par le moyen d'introduction (6). Au fur et à mesure de son déplacement vers le moyen de sortie (7), les matières solides se concentrent et augmentent la viscosité. L'augmentation de viscosité entraine une augmentation des forces de frottement ce qui se traduit par une augmentation du couple faisant tourner les disques. Les limites mécaniques du rotor dont le centre doit être creux pour permettre l'évacuation du filtrat et l'extérieur qui doit avoir un diamètre le plus faible possible sont découplées grâce au dispositif de la présente divulgation. En effet, les disques cotés introduction du produit demandent moins de couple alors que ceux du cotés évacuation du concentrât en nécessitent davantage. L'divulgation permet aussi de faire tourner les disques se trouvant sur des arbres de rotation séparés à des vitesses différentes voire avec des sens de rotations opposés ce qui augmente la turbulence et donc l'auto nettoyage des membranes.

La figure 11 montre aussi deux arbres de rotation distincts (3A,3B), un moteur relié à chaque arbre de rotation ainsi que deux zones (14A,14B) de conditions hydrodynamiques distinctes au sein de l'enceinte. Un substrat est introduit par le moyen d'introduction (6), puis le substrat est filtré au niveau desdits disques de filtration (4), les filtrats distincts (11A, 11B) issus simultanément du même substrat seront conduits depuis l'espaceur (10) vers l'intérieur de chaque arbre de rotation et sont évacués dans des directions opposées vers l'un des moyens d'évacuation (13A,13B). Les matières solides sont ensuite déplacées vers le moyen de sortie (7) des matière solides.

Les avantages de la présente divulgation est qu'elle permet :
- d'augmenter d'au-moins 50% la quantité de disques membranaires mis en œuvre par enveloppe (ou enceinte) pour une vitesse de rotation donnée.
- d'augmenter d'au moins 50% le flux d'évacuation du filtrat obtenu sur les disques membranaires à perte de charge identique ou inférieure.

Lorsque la concentration du produit à filtrer augmente, sa viscosité augmente également. Cela se traduit par une augmentation des frottements sur les disques de filtration qui tournent ce qui demande un effort de rotation plus important. De ce fait le couple augmente.

La puissance du moto-variateur (4 Kw) qui entraine l'arbre de rotation étant limitée, quand celui-ci arrive à sa puissance maximale, et que le couple nécessaire continu d'augmenter, le moteur diminue sa vitesse de rotation ( la limite d'un moteur est fixée par l'ampérage qui circule dans les bobinages qui peut être de 8,6 A pour 4 Kw). Dans un aspect, un Moteur MT 430 à une consigne de rotation à 40 Hz (40 Hz à vitesse de rotation de 284 rpm) mais le moteur, afin de ne pas dépasser ses caractéristiques, maintien un courant maximal à 8,6 A. Pour ce faire, il est possible de diminuer la vitesse de rotation de 40 Hz à 29 Hz. Ceci a pour effet indirect de diminuer le flux de perméation de l'installation.

**Tests comparatifs : Tableau 1 :**

| | Critères & normes | Présente invention | Standard actuel (mono moteur) |
|---|---|---|---|
| Vitesse maximale sur enceinte horizontale de 6m (standard) | rpm | 350 | 210 |
| Viscosité maximale admissible (à la vitesse max. de l'enceinte) | | 20-50 x (eau) (Vmax 350 rpm) | 2-5 x (eau) (Vmax 210 rpm) |
| Nombre d'enceintes horizontales pour une surface de 35 - 50 m² (selon espace entre disques) | nombre | 2 plaques de fonds (2 moteurs, 0 plaque opposée) 1 de 6 m | |

La présente divulgation permet d'accroitre d'un facteur 10 la viscosité maximale admissible.

**Tableau 2 :**

| CARACTERISTIQUES | unités | Enceinte connue mono-moteur | Présente invention avec enceinte bi-moteur asymétrique | Présente invention avec enceinte bi-moteur symétrique |
|---|---|---|---|---|
| Blocs membranes du train principal | nombre | 5 | 3 | 3 |
| Blocs membranes du second train | nombre | - | 2 | 2 |
| Puissance moteur train principal | kW | 4 | 3 | 3 |
| Puissance moteur second train | kW | - | 2 | 3 |
| Couple à 50Hz, 260 rpm sur train principal | Nm / disc | 0,64 | 0,8 | 0,8 |
| Couple à 50Hz, 260 rpm sur second train | Nm / disc | - | 0,8 | 1,2 |
| concentration maximale MS train principal | g/kg | 65 | 90 | 90 |
| concentration maximale MS second train | g/kg | - | 90 | 140 |
| quantité matière première en entrée | kg/h | 1000 | 1000 | 1000 |
| concentration MS en entrée | g/kg | 45 | 45 | 45 |
| sortie rétentat | kg/h | 692 | 500 | 321 |
| sortie perméat | kg/h | 308 | 500 | 679 |
| Rendement | kg perméat/ kwh | 90 | 118 | 133 |
| Gain de rendement | % | - | 31 | 48 |

Le tableau 2 montre que la présente divulgation comportant une enceinte bi-moteur asymétrique possède un gain de rendement de 31% (118-90=28, si 90=100% alors 28=31%). Le tableau 2 montre que la présente divulgation comportant une enceinte bi-moteur symétrique possède un gain de rendement de 48% (133-90=43, si 90=100% alors 43=48%).

**Tableau 3 : comparaison entre l'art antérieur et la présente invention.**

| Fréquence en Hz | Vitesse de rotation de l'arbre de rotation filtrant en rpm | Couple maximum en Nm | Puissance du moteur en Watt | Couple par disques - art antérieur pour 3x36 disques en Nm | Couple par disques - présente invention pour 2x 36 disques en Nm | Couple par disques - présente invention pour 1x 36 disques en Nm |
|---|---|---|---|---|---|---|
| 20 | 117 | 84,5 | 1031 | 0,78 | 1,17 | 2,35 |
| 35 | 202 | 131,3 | 2780 | 1,22 | 1,82 | 3,65 |
| 50 | 289 | 131,2 | 4000 | 1,21 | 1,82 | 3,64 |
| 60 | 347 | 121 | 4400 | 1,12 | 1,68 | 3,36 |

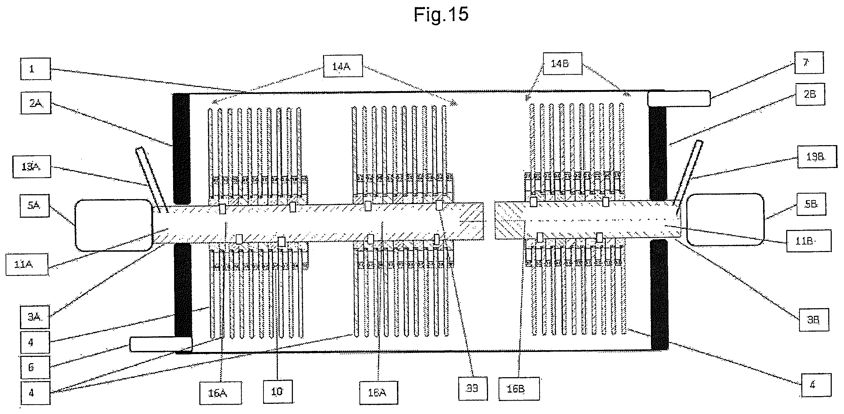

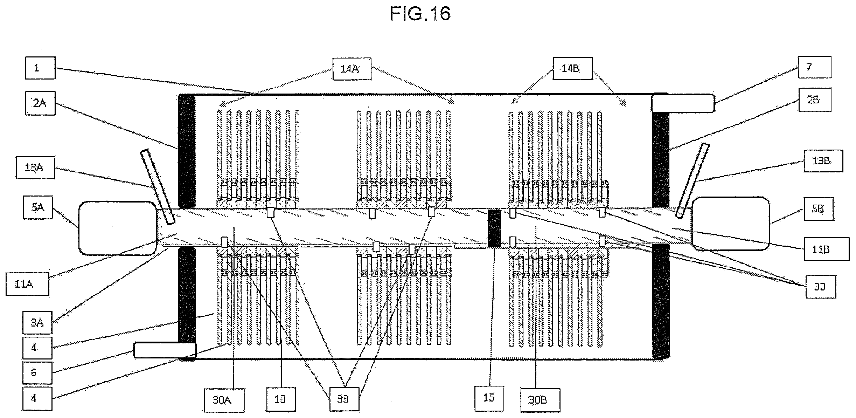

Dans le tableau 3 (à lire avec la figure 15), l'augmentation de viscosité entraine une augmentation des forces de frottement ce qui se traduit par une augmentation du couple faisant tourner les disques.

Les limites mécaniques de l'arbre de rotation dont le centre doit être creux pour permettre l'évacuation du filtrat et dont l'extérieur doit avoir un diamètre le plus faible possible, sont découplées grâce au dispositif de la présente divulgation.

En effet, les disques cotés introduction du produit demandent moins de couple alors que ceux du côté évacuation du concentrât en nécessitent davantage.

Ladivulgation permet aussi de faire tourner les disques se trouvant sur des arbres de rotation séparés à des vitesses différentes voire avec des sens de rotations opposés ce qui augmente la turbulence et donc l'auto nettoyage des membranes.

Le liquide à filtrer est introduit par le moyen d'introduction (6). Au fur et à mesure de son déplacement vers le moyen de sortie (7), les matières solides se concentrent et augmentent la viscosité du fluide.

Dans la dernière colonne du tableau 3 le couple par disques de la présente divulgation est multiplié par environ 3 par rapport au couple par disques de l'art antérieur, ce qui permet de traiter des produits beaucoup plus visqueux et donc plus concentrés.

D'autres mises en œuvre sont possibles :
Par exemple une répartition 4 blocs / 1 bloc entre les deux trains de membranes (au lieu de 3 & 2 présentés dans le tableau 2)
Par exemple avec des moteurs plus puissants dans la limite du couple de chacun des axes, par exemple 4 & 3 kW (asymétrique) ou 4 & 4 kW (symétrique)
Par exemple avec d'autres fréquences moteur (40-60 Hz) et d'autres vitesses de rotation (100 - 500 rpm).

## Revendications

1. Dispositif de filtration comprenant:
- une enceinte (1) définissant un axe longitudinal, ladite enceinte est apte à être obstruée à chaque extrémité par au-moins une plaque d'étanchéité (2A,2B ),
- plusieurs disques de filtration (4) aptes à être mis en rotation et au-moins un espaceur (10) apte à être placé entre chaque disques de filtration (4), ledit espaceur (10) est apte à définir un espace inter-disque (10A),
- deux arbres (3A ;3B) de rotation distincts creux aptes à mettre en rotation lesdits disques de filtration (4), les deux arbres de rotation sont aptes à posséder au-moins une lumière (33) adaptée pour recueillir du filtrat (11A, 11B),
- lesdits disques de filtration (4) et ledit espaceur (10) sont apte à être disposés sur les deux arbres de rotation (3A,3B) à l'intérieur de ladite enceinte (1),
- au-moins un moyen d'introduction (6) du liquide à filtrer apte à traverser au moins une plaque d'étanchéité (2A, 2B),
- **caractérisé en ce que** ladite enceinte (1) est apte à être traversée par deux **arbres** (3A ;3B) de rotation, et lesdits arbres de rotation sont aptes à être animés chacuns par **un moyen de rotation** (5A,5B) distinct à une des extrémités desdits arbres, ledit moyen de rotation est apte à obturer les extrémités ouvertes desdits arbres de rotation creux à l'extérieur de l'enceinte, du côté traversant lesdites plaques d'étanchéité, lesdits moyens de rotation et lesdits arbres de rotation étant coaxiaux, et **en ce que**
- les disques de filtration (4) sont aptes à filtrer deux filtrats distincts et la collection desdits filtrats est apte à être effectuée dans deux parties distinctes au sein de ladite enceinte, chaque partie distincte est apte à évacuer un filtrat différent dans des directions opposées, les deux parties distinctes sont chacune apte à être délimitées d'une part par un moyen d'évacuation (13A, 13B) du filtrat et d'autre part par l'extrémité distale de chaque arbre de rotation interne à l'enceinte, lesdits moyens d'évacuation sont aptes à être localisés sur lesdits arbres de rotation entre ladite plaque d'étanchéité (2A ;2B) et l'extrémité proximale dudit moyen de rotation,
- et **en ce que** chaque arbre de rotation est situé sur ledit axe longitudinal central de ladite enceinte.

2. Dispositif selon la revendication 1, dans lequel un espace (10A) entre ladite enceinte (1) et le disque de filtration (4) est compris entre 10mm et 400mm.

3. Dispositif selon la revendication 2, dans lequel la longueur de l'espace inter-disque (10A) varie entre 4mm et 10mm et un joint d'étanchéité (99) y est logé.

4. Dispositif selon la revendication 1, dans lequel le moyen d'introduction (6 ) du liquide à filtrer (8) est connecté à ladite plaque d'étanchéité (2A,2B) et le moyen de sortie (7) du concentrât (12) est connecté en un point situé entre les extrémités intérieures des arbres (3A,3B) situés dans l'enceinte.

5. Dispositif selon la revendication 1, dans lequel le moyen d'introduction (6 ) du liquide à filtrer (8) est connecté à une des plaques d'étanchéité (2A,2B) et le moyen de sortie (7) du concentrât (12) est connectée à la plaque d'étanchéité (2A,2B) opposée.

6. Dispositif selon la revendication 1, dans lequel lesdits disques de filtration (4) sont répartis en une pluralité de groupes dont les seuils de coupures sont choisis indépendamment les uns des autres pour permettre l'obtention simultanée de filtrats (11A,11B) obtenus avec des seuils de coupure différents.

7. Procédé de filtration mis en œuvre par le dispositif défini aux revendications 1 à 6, **caractérisé en ce qu'**il comprend les étapes suivantes:
- introduction du liquide à filtrer (8) par au-moins un moyen d'introduction (6 ),
- mise en rotation de deux arbres (3A,3B) de rotation, situés sur l'axe longitudinal central d'une enceinte (1), par au-moins un moyen de rotation (5A,5B) distinct à au-moins une des extrémités dudit arbre de rotation,
- filtrage dudit liquide à filtrer (8) par passage à travers les disques de filtration (4),
- obtention d'un concentrât (12) à l'intérieur de l'enceinte (1) ,
- évacuation dudit concentrât (12) hors de ladite enceinte (1) par le moyen de sortie (7) dudit concentrât (12),
- écoulement d'un filtrat (11A,11B) dans deux parties distinctes au sein de ladite enceinte, chaque partie distincte évacuant un filtrat différent dans des directions opposées, les deux parties distinctes étant chacune délimitées d'une part par un moyen d'évacuation (13A,13B) du filtrat et d'autre part par l'extrémité distale de chaque arbre de rotation interne à l'enceinte,
- évacuation du filtrat (11A) par un premier moyen d'évacuation (13A) et du filtrat (11B) par un deuxième moyen d'évacuation (13B) étant localisés sur ledit arbre de rotation à l'extérieur de ladite enceinte, lesdits moyens d'évacuation étant localisés sur ledit arbre de rotation entre ladite plaque d'étanchéité (2 ;2A ;2B) et l'extrémité proximale dudit moyen de rotation.

## Patentansprüche

1. Filtrationsvorrichtung, die Folgendes umfasst:
- einen Behälter (1), der eine Längsachse definiert, wobei der Behälter dazu geeignet ist, an jedem Ende durch mindestens eine Dichtungsplatte (2A, 2B) verschlossen zu werden,
- mehrere Filtrationsscheiben (4), die dazu geeignet sind, in Rotation versetzt zu werden, und mindestens einen Abstandshalter (10), der dazu geeignet ist, zwischen jeder Filtrationsscheibe (4) platziert zu werden, wobei der Abstandshalter (10) dazu geeignet ist, einen Scheibenzwischenraum (10A) zu definieren,
- zwei separate hohle Wellen (3A; 3B) für die Rotation, die dazu geeignet sind, die Filtrationsscheiben (4) in Rotation zu versetzen, die zwei Rotationswellen sind dazu geeignet, mindestens eine Aussparung (33) zu besitzen, die dazu geeignet ist, Filtrat (11A, 11B) aufzufangen,
- die Filtrationsscheiben (4) und der Abstandshalter (10) sind dazu geeignet, auf den zwei Rotationswellen (3A, 3B) im Inneren des Behälters (1) angeordnet zu werden,
- mindestens ein Einführungsmittel (6) für die zu filtrierende Flüssigkeit, das dazu geeignet ist, mindestens eine Dichtungsplatte (2A, 2B) zu durchqueren,
- **dadurch gekennzeichnet, dass** der Behälter (1) dazu geeignet ist, von zwei **Wellen** (3A; 3B) für die Rotation durchquert zu werden, und die Rotationswellen jeweils dazu geeignet sind, durch ein separates **Rotationsmittel** (5A, 5B) an einem der Enden der Wellen angetrieben zu werden, das Rotationsmittel dazu geeignet ist, die offenen Enden der hohlen Rotationswellen außerhalb des Behälters auf der die Dichtungsplatten durchquerenden Seite abzudichten, wobei die Rotationsmittel und die Rotationsachsen koaxial sind, und dadurch, dass
- die Filtrationsscheiben (4) dazu geeignet sind, zwei separate Filtrate zu filtrieren, und die Sammlung der Filtrate in zwei separaten Teilen innerhalb des Behälters erfolgen kann, jeder separate Teil dazu geeignet ist, ein unterschiedliches Filtrat in entgegengesetzte Richtungen abzuführen, die beiden separaten Teile jeweils dazu geeignet sind, einerseits durch ein Abführungsmittel (13A, 13B) für das Filtrat und andererseits durch das distale Ende jeder innerhalb des Behälters befindlichen Rotationswelle abgegrenzt zu werden, die Abführungsmittel dazu geeignet sind, auf den Rotationswellen zwischen der Dichtungsplatte (2A; 2B) und dem proximalen Ende des Rotationsmittels positioniert zu werden,
- und dadurch, dass jede Rotationsachse auf der zentralen Längsachse des Behälters gelegen ist.

2. Vorrichtung nach Anspruch 1, bei der ein Abstand (10A) zwischen dem Behälter (1) und der Filtrationsscheibe (4) zwischen 10 mm und 400 mm liegt.

3. Vorrichtung nach Anspruch 2, bei der die Länge des Scheibenzwischenraums (10A) zwischen 4 mm und 10 mm variiert und in der eine Dichtung (99) untergebracht ist.

4. Vorrichtung nach Anspruch 1, bei der das Einführungsmittel (6) für die zu filtrierende Flüssigkeit (8) mit der Dichtungsplatte (2A, 2B) verbunden ist und das Auslassmittel (7) für das Konzentrat (12) an einem Punkt verbunden ist, der zwischen den inneren Enden der im Behälter gelegenen Wellen (3A, 3B) gelegen ist.

5. Vorrichtung nach Anspruch 1, bei der das Einführungsmittel (6) für die zu filtrierende Flüssigkeit (8) mit einer der Dichtungsplatten (2A, 2B) verbunden ist und das Auslassmittel (7) für das Konzentrat (12) mit der gegenüberliegenden Dichtungsplatte (2A, 2B) verbunden ist.

6. Vorrichtung nach Anspruch 1, bei der die Filtrationsscheiben (4) in eine Vielzahl von Gruppen aufgeteilt sind, deren Trennschwellen unabhängig voneinander gewählt sind, um das gleichzeitige Erhalten von Filtraten (11A, 11B) zu ermöglichen, die mit unterschiedlichen Trennschwellen erhalten werden.

7. Filtrationsverfahren, das mit der in den Ansprüchen 1 bis 6 definierten Vorrichtung durchgeführt wird, **dadurch gekennzeichnet, dass** es die folgenden Schritte umfasst:
- Einführung der zu filtrierenden Flüssigkeit (8) durch mindestens ein Einführungsmittel (6),
- Versetzen von zwei auf der zentralen Längsachse eines Behälters (1) gelegenen Rotationswellen (3A, 3B) in Rotation durch mindestens ein separates Rotationsmittel (5A, 5B) an mindestens einem der Enden der Rotationswelle,
- Filtrieren der zu filtrierenden Flüssigkeit (8) durch Durchtritt über die Filtrationsscheiben (4),
- Erhalten eines Konzentrats (12) im Inneren des Behälters (1),
- Abführung des Konzentrats (12) aus dem Behälter (1) durch das Auslassmittel (7) für das Konzentrat (12),
- Ableitung eines Filtrats (11A, 11B) in zwei separate Teile innerhalb des Behälters, wobei jeder separate Teil ein unterschiedliches Filtrat in entgegengesetzte Richtungen abführt, wobei die zwei separaten Teile jeweils einerseits durch ein Abführungsmittel (13A, 13B) für das Filtrat und andererseits durch das distale Ende jeder innerhalb des Behälters befindlichen Rotationswelle abgrenzt,
- Abführung des Filtrats (11A) durch ein erstes Abführungsmittel (13A) und des Filtrats (11B) durch ein zweites Abführungsmittel (13B), die auf der Rotationswelle außerhalb des Behälters positioniert sind, wobei die Abführungsmittel auf der Rotationswelle zwischen der Dichtungsplatte (2; 2A; 2B) und dem proximalen Ende des Rotationsmittels positioniert sind.

## Claims

1. A filtration device comprising:
- an enclosure (1) defining a longitudinal axis, where said enclosure is suited for being blocked at each end by at least one seal plate (2A, 2B),
- several filtration disks (4) that can be rotated and at least one spacer (10) that can be placed between each filtration disk (4), where said spacer (10) is suited for defining an inter-disk space (10A),
- two hollow, distinct rotation shafts (3A; 3B) suited for rotating said filtration disks (4), where the two rotation shafts are suited for having at least one opening (33) suited for receiving the filtrate (11A, 11B),
- said filtration disks (4) and said spacer (10) are suited for being placed on the two rotation shafts (3A, 3B) inside said enclosure (1),
- at least one means of adding (6) the liquid to be filtered suitable for passing through at least one seal plate (2A, 2B),
- **characterized in that** said enclosure (1) is suited for two rotation **shafts** (3A; 3B) to pass through it, and where said rotation shafts are suited for each being driven by a distinct **rotation means** (5A, 5B) at one of the ends of said shafts, where said rotation means is suited for blocking the open ends of said hollow rotation shafts on the outside of the enclosure, from the side passing through said seal plates, and where said rotation means and said rotation shafts are coaxial, and **in that**
- the filtration disks (4) are suited for filtering two distinct filtrates and where the collection of said filtrates can be done in two distinct parts within said enclosure, where each distinct part is suited for evacuating a different filtrate in opposite directions, where the two distinct parts are each suited for being delimited on the one hand by an evacuation means (13A, 13B) of the filtrate and on the other hand by the distal end of each rotation shaft inside the enclosure, where said evacuation means are suited for being located on said rotation shafts between said seal plate (2A; 2B) and the proximal end of said rotation means,
- and **in that** each rotation shaft is located on said central longitudinal axis of said enclosure.

2. The device according to claim 1, wherein a space (10A) between said enclosure (1) and the filtration disk (4) is included between 10 mm and 400 mm.

3. The device according to claim 2, wherein the length of the inter-disk space (10A) varies between 4 mm and 10 mm and a seal (99) is housed there.

4. The device according to claim 1, wherein the means of adding (6) the liquid to be filtered (8) is connected to said seal plate (2A, 2B) and the outlet means (7) for the concentrate (12) is connected at a point located between the inner ends of the shafts (3A, 3B) located in the enclosure.

5. The device according to claim 1, wherein the means of adding (6) the liquid to be filtered (8) is connected to one of the seal plates (2A, 2B) and the outlet means (7) for the concentrate (12) is connected to the opposite seal plate (2A, 2B).

6. The device according to claim 1, wherein said filtration disks (4) are distributed in a plurality of groups in which the cutoff thresholds are selected independently of each other to allow simultaneously obtaining filtrates (11A, 11B) obtained with different cutoff thresholds.

7. A filtration method, implemented by the device defined in claims 1 to 6, **characterized in that** it comprises the following steps:
- adding the liquid to be filtered (8) by at least one means of adding (6),
- rotating two rotation shafts (3A, 3B), located on the central longitudinal axis of an enclosure (1), by at least one distinct rotation means (5A, 5B) at at least one of the ends of said rotation shaft,
- filtering said liquid to be filtered (8) by passage through the filtration disks (4);
- obtaining a concentrate (12) inside the enclosure (1),
- evacuating said concentrate (12) out of said enclosure (1) through the outlet means (7) for said concentrate (12),
- flowing of a filtrate (11A, 11B) in two distinct parts within said enclosure, where each distinct part evacuates a different filtrate in opposite directions, and where the two distinct parts are each delimited on the one hand by an evacuation means (13A, 13B) of the filtrate and on the other by the distal end of each rotation shaft inside the enclosure,
- evacuating the filtrate (11A) by a first evacuation means (13A) and the filtrate (11B) by a second evacuation means (13B) located on said rotation shaft outside said enclosure, where said evacuation means are located on said rotation shaft between said seal plate (2; 2A; 2B) and the proximal end of said rotation means.
